(19) Europäisches Patentamt
European Patent Office
Office européen des brevets

(11) **EP 2 304 879 B1**

(12) **EUROPEAN PATENT SPECIFICATION**

(45) Date of publication and mention of the grant of the patent:
**29.03.2017  Bulletin 2017/13**

(21) Application number: **09766931.1**

(22) Date of filing: **29.01.2009**

(51) Int Cl.:
**H04B 1/7105** *(2011.01)*    **H04B 1/712** *(2011.01)*

(86) International application number:
**PCT/SE2009/050089**

(87) International publication number:
**WO 2009/154541 (23.12.2009 Gazette 2009/52)**

(54) **A METHOD AND APPARATUS FOR DEMODULATION OF QAM SIGNAL USING SYMBOL-SPECIFIC AMPLITUDE REFERENCE ESTIMATION**

EIN VERFAHREN UND GERÄT ZUR DEMODULATION VON QAM SIGNALEN UNTER VERWENDUNG EINER SYMBOL-SPEZIFISCHEN AMPLITUDEN-REFERENZ-SCHÄTZUNG

PROCÉDÉ ET APPAREIL POUR LA DÉMODULATION D'UN SIGNAL QAM UTILISANT UNE ESTIMATION DE RÉFÉRENCE D'AMPLITUDE SPÉCIFIQUE À UN SYMBOLE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **18.06.2008   US 141607**

(43) Date of publication of application:
**06.04.2011   Bulletin 2011/14**

(73) Proprietor: **Telefonaktiebolaget LM Ericsson (publ)**
**164 83 Stockholm (SE)**

(72) Inventors:
• **WANG, Yi-Pin Eric**
**Cary**
**North Carolina 27513 (US)**
• **BOTTOMLEY, Gregory E**
**Cary**
**North Carolina 27518 (US)**
• **CAIRNS, Douglas A**
**Durham**
**North Carolina 27705 (US)**

(74) Representative: **Ericsson**
**Patent Development**
**Torshamnsgatan 21-23**
**164 80 Stockholm (SE)**

(56) References cited:
**WO-A-2005/036849     US-A1- 2006 188 006**
**US-A1- 2007 047 628**

**Description**

**TECHNICAL FIELD**

The present invention generally relates to demodulating Quadrature Amplitude Modulation (QAM) signals, and particularly relates to determining symbol-specific amplitude references for demodulating QAM signals.

**BACKGROUND**

As communication systems evolve to higher data rates, the strong tendency is to employ higher-order modulation in which amplitude as well as phase is modulated. Evolutionary examples include the modulation schemes introduced for High Speed Packet Access (HSPA) services in Wideband Code Division Multiple Access (WCDMA), and introduced for similar higher-rate services in CDMA2000. These Third Generation (3G) systems both use higher-order QAM techniques to provide data rate increases, and both use Direct Sequence (DS) CDMA signal generation techniques, where orthogonal and/or quasi-orthogonal spreading codes are used to define different channels (traffic, control, pilot, etc.).

Demodulation of signals modulated according to these higher-modulation schemes requires accurate amplitude references at the receiver. It is known, for example, to account for traffic-to-pilot power differences in such processing contexts. Particularly, a common receiver technique uses pilot signal values for channel estimation, where the pilot-derived channel estimates are then used to determine soft combining weights for processing traffic signal values. Accurate processing in this context requires "scaling" to account for the transmit power differences between the pilot and traffic channels.

Amplitude reference estimation appears in the commonly owned U.S. Patent No. 7,269,205 to Wang, which is entitled "Method and Apparatus for Signal Demodulation." An example of amplitude estimation for QAM demodulation appears in Equation 8 in the '205 patent, where the estimate is developed according to "code-averaging" techniques, wherein an average amplitude offset is determined over two or more spreading codes. Further amplitude reference estimation teachings, e.g., for a given spreading code and traffic channel of interest, appear in the co-pending and commonly owned U.S. Application No. 11/064,351 by Cairns, as filed on 23 February 2005 and entitled "A Method and Apparatus for Estimating Gain Offsets for Amplitude-Modulated Communication Signals." The '351 application is now published as U.S. Publication 2006/0188006 A1.

Further traffic-to-pilot scaling teachings appear in US 2007/0047628 A1 entitled "A Method and Apparatus for QAM Demodulation in a Generalized RAKE Receiver." which discloses exemplary techniques for estimating traffic-to-pilot ratios in the context of Generalized Rake (G-Rake) processing. (For exemplary G-Rake processing details, see, e.g., G. E. Bottomley, T. Ottosson, and Y.-P. E. Wang, "A Generalized RAKE receiver for interference suppression," IEEE J. Select. Areas Commun., vol. 18, pp. 1536-1545, Aug. 2000.) Such scaling accounts for using pilot-based channel estimates in traffic channel symbol combining operations. Additional details regarding traffic-to-pilot scaling, particularly for Log-Likelihood-Ratio (LLR) estimation, appear in the co-pending and commonly owned U.S. Application No. 11/215,638, as filed on 30 Aug. 2005 and entitled "A Method and Apparatus for Received Communication Signal Processing."

As a general proposition, the above references do not teach making symbol-specific amplitude estimations, wherein the amplitude reference for demodulation of a given symbol of interest is specific to that symbol, and wherein despreading two or more symbols of interest, e.g., symbols sent in parallel via different code sequences during the same symbol interval, involves the estimation of symbol-specific amplitude references for each such code. In contrast, there are known examples of symbol-specific amplitude estimation. Particularly, see K. Yu, J.S. Evans, and I.B. Collings, "Performance analysis of LMMSE receivers for M-ary QAM in Raleigh faded CDMA channels," IEEE Trans. Veh. Technol., vol. 52, pp. 1242-1253, Sep. 2003; and also see K. Yu and I. Oppermann, "Symbol/bit-error rate of LMMSE receiver for M-ary QAM in multipath faded CDMA channels," IEEE Trans. Wireless Commun., vol. 4, pp. 1400-1406, July 2005.

These two references teach a form of code-specific amplitude estimation for QAM demodulation, in the particular context of Linear Multi-user Detection (LMUD). However, in these references, code-specific amplitude estimation relies on the use of a code-specific impairment covariance matrix, $\mathbf{R}_j$. A practical receiver implementation would, according to these teachings, be required to compute/maintain an impairment covariance matrix for each spreading code of interest, and further to invert each such matrix (or perform equivalent processing) for each estimation of a code-specific amplitude reference. Such processing may not be practical or desirable, in at least some receiver implementations.

**SUMMARY**

According to the present invention a method according to claim 1 and a receiver circuit according to claim 12 are provided.

According to the teachings presented herein, "spreading code" knowledge is used in forming amplitude references for QAM demodulation in a DS-CDMA receiver. Here, "spreading code" broadly refers to spreading/channelization codes, scrambling codes, or the product of such codes. Further, these teachings apply to any linear DS-CDMA demodulator, such as Rake, Generalized Rake (G-Rake), or chip equalizer, and to nonlinear demodulators that employ linear filtering, such as decision feedback equalizers (DFEs). Advantageously, the determination of symbol-specific amplitude references relies on shared correlation estimates and/or shared combining weights that are common to two or more symbols of interest, thereby significantly reducing processing requirements as compared to the use of symbol-specific impairment correlation estimates.

For example, in one or more embodiments, the teachings herein provide novel parametric formulations for symbol-specific reference amplitude estimates that account for code sequence cross-correlations. However, such accounting does not require computing/maintaining code-specific impairment covariance matrices. Rather, one or more embodiments of the proposed method rely on the calculation and inversion of a common data correlation matrix for detecting code-division multiplexed symbols transmitted in the same symbol interval. This approach results in a much lower receiver complexity compared to known approaches to generating symbol-specific amplitude references.

Accordingly, in at least one embodiment presented herein, a receiver circuit is configured for processing a received DS-CDMA signal that includes amplitude-modulated first and second symbols of interest. The receiver circuit is characterized by one or more processing circuits that are configured to generate at least one of shared correlation estimates and shared combining weights in common for the first and second symbols, and determine symbol-specific net channel responses for the first and second symbols. The processing circuit(s) are further configured to compute symbol-specific amplitude references for the first and second symbols as a function of symbol-specific net channel responses and the at least one of the shared correlation estimates and the shared combining weights. As will be understood, the processing circuit(s) may comprise one or more digital processing circuits, e.g., microprocessors/microcontrollers, digital signal processors, ASICs, FPGAs, etc.

## BRIEF DESCRIPTION OF THE DRAWINGS

Fig. 1 is a block diagram of one embodiment of a wireless communication network in or for which demodulation teachings presented herein are implemented.
Fig. 2 is a block diagram of one embodiment of a base station and a mobile station, either or both of which incorporate receiver circuits configured according to demodulation teachings presented herein.
Fig. 3 is a logic flow diagram of one embodiment of processing logic implementing a method presented herein.
Figs. 4-7 are block diagrams of various embodiments of a receiver circuit configured according to demodulation teachings presented herein.

## DETAILED DESCRIPTION

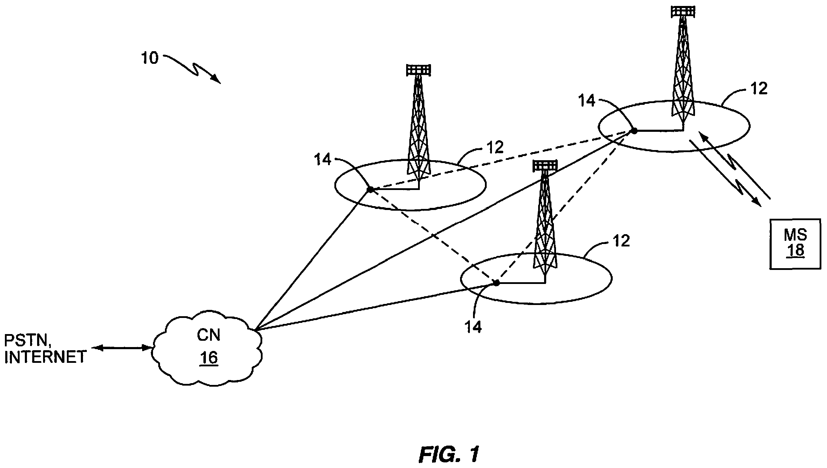

Fig. 1 illustrates one embodiment of a wireless communication network 10. The illustrated network 10 includes a number of possibly overlapping cells 12, each including a base station 14 or other transceiver entity, and a core network 16 for communicatively coupling mobile stations 18 (one shown for clarity) to one or more communication networks- e.g., the PSTN and/or the Internet. In one embodiment, network 10 is configured as a Wideband CDMA (WCDMA) network, a CDMA2000 network, a 1xEVDO network (HDR), or other such network employing Direct Sequence CDMA (DS-CDMA) signals having amplitude-modulated symbol information for high data rate uplink and/or downlink services.

In this context, one or both of the base stations 14 and the mobile stations 18 are configured to improve demodulation performance, particularly with received DS-CDMA signal using higher-order modulation constellations, such as 16-QAM and 64-QAM, while advantageously avoiding undue computational complexity. In particular, the mobile stations 18 and the base stations 14 are configured to produce symbol-specific amplitude references, for demodulating specific symbols of interest from a received DS-CDMA signal, based on the use of shared correlation estimates and/or shared combining weights. Doing so avoids the computational burden of conventional amplitude reference estimation, wherein symbol-specific amplitude estimation relies on the computationally expensive approach of computing and inverting symbol-specific correlation estimates.

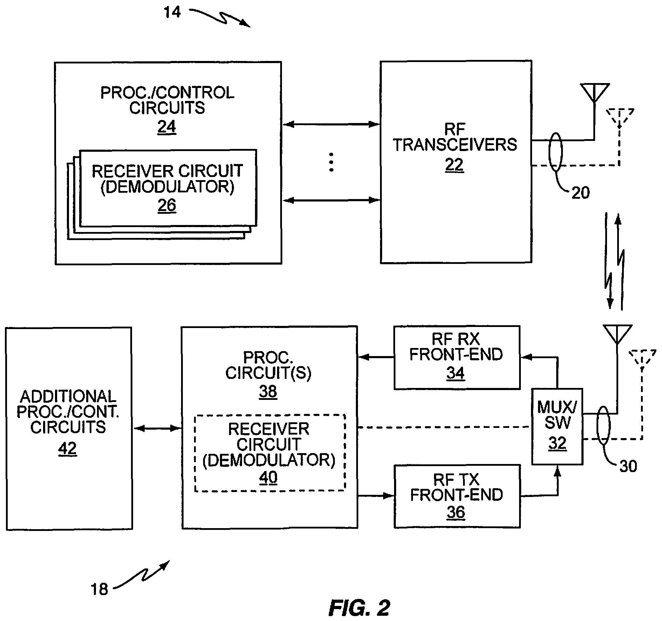

Fig. 2 provides a non-limiting functional processing context for improved QAM demodulation as taught herein, wherein one embodiment of a base station 14 includes one or more transmit/receive (TX/RX) antennas 20, radiofrequency (RF) transceivers 22, and processing/control circuits 24, which include one or more receiver circuits 26 for (digitally) processing signal samples obtained from the antenna-received signals of one or more mobile stations 18. In particular, the receiver circuit(s) 26 may be configured according to QAM demodulation teachings presented herein. Similarly, the illustrated mobile station 18 comprises one or more TX/RX antennas 30, and a switch or duplexer circuit 32 for coupling an RF receiver front-end 34 and RF transmitter front-end 36 to the TX/RX antennas 30. The mobile station 18 further comprises one or more processing circuits 38, which include a receiver circuit 40 configured to carry out QAM demodulation processing as taught herein, and one or more additional processing/control circuits 42 (e.g., system controllers, user interfaces, etc.). The actual implementation of the mobile station 18 will depend on its intended use, and the term "mobile station" as used herein should be broadly understood to be essentially any type of communication device, such as cellular radiotelephone, pager, wireless PDA, network interface module or card, laptop computer, etc.

Further, those skilled in the art will appreciate that the (base station) receiver circuit 26 and/or the (mobile station) receiver circuit 40 are, in one or more embodiments, implemented via digital processing circuits. For example, in one embodiment, the receiver circuits 26 and/or 40 are implemented via one or more microcontrollers/microprocessors, digital signal processors, ASICs, FPGAs, etc.

As such, those skilled in the art will appreciate that QAM demodulation as taught herein, including the advantageous estimation of symbol-specific amplitude references, is implemented in hardware, software, or any combination thereof. For example, in one or more embodiments, the receiver circuits 26 and/or 40 are implemented by configuring a digital processing circuit via stored computer program instructions held in a memory circuit or other storage element in or accessible to the receiver circuits 26 and/or 40. Also, the discussion hereinafter uses (mobile station) receiver circuit 40 as an example, but it applies equally to the (base station) receiver circuit 26 unless noted otherwise.

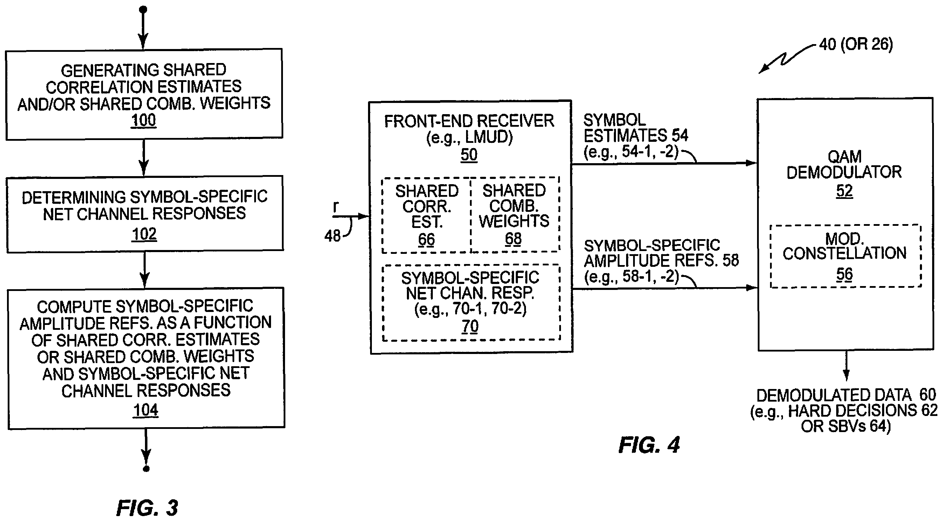

Accordingly, in one or more embodiments, the receiver circuit 40 includes one or more processing circuits that are configured to implement a method of processing a received DS-CDMA signal that includes amplitude-modulated first and second symbols of interest. Fig. 3 illustrates processing logic for the method, wherein such processing is characterized by generating at least one of shared correlation estimates and shared combining weights in common for the first and second symbols (Block 100), and determining symbol-specific net channel responses for the first and second symbols (Block 102). The method is further characterized by computing symbol-specific amplitude references for the first and second symbols as a function of symbol-specific net channel responses and the at least one of the shared correlation estimates and the shared combining weights (Block 104).

Note that Fig. 3 is not meant to imply any limitation regarding processing sequence or order, unless noted, and it should be understood that at least some of the processing operations can be performed in another order, and/or that at least some of the processing operations, or subtasks thereof, can be performed in parallel with other processing tasks, as part of ongoing and/or background processing, etc.

Further characterizing the method of Fig. 3 in one or more embodiments, determining the symbol-specific net channel responses comprises, in one or more embodiments, computing first and second symbol-specific net responses for the first and second symbols based on aperiodic autocorrelation functions of first and second spreading code sequences used in transmitting the first and second symbols, respectively. As noted, the spreading code sequences may be first and second spreading codes, respectively used in transmitting the first and second symbols, or may comprise the product of such spreading codes with first and second (long) scrambling codes. Indeed, in this context, the notion of "symbol-specific" amplitude references (and other symbol-specific values discussed herein) contemplate that the particular code sequences to be considered changed from symbol period to symbol period.

Further characterizing the method of Fig. 3 in one or more embodiments, generating the at least one of the shared correlation estimates and the shared combining weights comprises generating shared correlation estimates as one of code-averaged impairment or data correlation estimates that are not specific to either the first or second symbol, or as code-specific data correlation estimates from the received DS-CDMA signal that depend on both the first and second symbols. Data values refer to pre-processed received signal values such as filtered signal or chip samples, despread values, Rake-combined chip or despread values, and the like. In at least one embodiment, "chip sample" correlation estimates also may be referred to as "data sample" correlation estimates, and they are determined by estimating cross-correlations between the digitized chip-rate or sub-chip-rate stream(s) of digital sample values produced by the RF receiver front-end 34. The streams may be over-sampled and/or include samples for each of one or more antenna-received signals (such as in diversity or MIMO reception cases).

Further characterizing the method of Fig. 3 in one or more embodiments, computing the symbol-specific amplitude references for the first and second symbols comprises computing the symbol-specific amplitude references as a function of symbol-specific net channel responses and the shared correlation estimates. In at least one such embodiment, the method is further characterized by deriving combining weights from the shared correlation estimates and computing the symbol-specific amplitude references as a function of the symbol-specific net channel responses and the combining weights.

Further characterizing the method of Fig. 3 in one or more embodiments, generating the at least one of the shared correlation estimates and the shared combining weights comprises adaptively estimating shared combining weights in common for the first and second symbols via an adaptive filtering process, and computing the symbol-specific amplitude references as a function of the symbol-specific net channel responses and the shared combining weights. For example, in one embodiment, the receiver circuit 40 implements an adaptive filtering process wherein combining weights are directly estimated on an iterative basis and used for coherently combining signal values. For example, the combining weights are used to coherently combine signal values for the first symbol and for the second symbol, across some number of processing delays, at least some of which may be aligned with multipath delays of the received DS-CDMA signal.

Significant implementation flexibility exists. For example, the estimates of first and second symbols of interest, e.g., first and second symbols received in the same symbol period, may be generated in a Generalized Rake (G-Rake) or chip equalization combining process. Such a process includes generating the shared correlation estimates and/or the shared combining weights, as discussed above, in common for the first and second symbols by computing shared correlation estimates as code-averaged correlation estimates. The combining process further includes combining signal values for the first symbol and for the second symbol according to combining weights derived from the code-averaged correlation estimates. With such processing, the first and second symbols may be demodulated according to a defined amplitude-based modulation constellation as a function of the first and second symbol estimates and the symbol-specific amplitude references.

In another implementation, the first and second symbol estimates are generated in a linear multi-user-detection (MUD) process that includes generating the shared correlation estimates and/or shared combining weights in common for the first and second symbols by computing shared correlation estimates as code-specific correlation estimates that depend on the first and second symbols. Such processing further includes combining signal values for the first symbol and for the second symbol according to combining weights derived from the code-specific correlation estimates, to generate the first and second symbol estimates, respectively.

With the above example variations in mind, the method of Fig. 3 may be implemented for a received signal 48 in the processing circuits 50 and 52 shown in Fig. 4, which represent a non-limiting example embodiment of the receiver circuit 40 (or receiver circuit 26). The illustrated circuits, which may be implemented in hardware, software, or any combination thereof, include a front-end receiver 50 and an M-ary QAM demodulator 52 (e.g., $M$ = 16 or 64).

In operation, the QAM demodulator 52 demodulates a number of symbols of interest from the received signal 48, which may be a multi-coded DS-CDMA signal wherein multiple symbols are transmitted in the same symbol interval using different CDMA codes sequences. In at least one embodiment, the RF receiver front-end 34 (shown in Fig. 2) amplifies, filters, down-converts, and digitizes incoming signals received on the one or more antennas 30 to produce one or more streams of digital samples as the received signal 48. As such, the received signal 48 may be a digital baseband stream, preferably over-sampled relative to the signal chip rate. In some embodiments, it is processed at the chip level, e.g., chip equalization, etc., and in other embodiments, it is processed at the symbol level, e.g., symbol-level despreading, combining, etc.

In either case, the front-end receiver 50 generates first and second symbol estimates 54 for first and second symbols of interest, and the QAM demodulator 52 demodulates the first and second symbols by processing the symbol estimates 54 as a function of a defined modulation constellation 56 and symbol-specific amplitude references 58, as generated by the front-end receiver 50. The defined modulation constellation 56 is, in one or more embodiments, defined on a normalized basis and stored in memory as a table of phase/amplitude pairs or as some other data structure that defines the amplitude/phase positions of a number of modulation constellation points or symbols. It is contemplated, for example, to store data defining a 16-QAM constellation for demodulation, or a 64-QAM constellation, or both.

Keeping with the first and second symbols of interest as an example, for each symbol period (or for each interval involving changed code sequence information), the front-end receiver 50 produces first and second symbol estimates 54-1 and 54-2 for the first and second symbols of interest, respectively. The front-end receiver also correspondingly produces symbol-specific amplitude references 58-1 and 58-2 for the first and second symbol estimates 54-1 and 54-2, respectively, for use by the demodulator 52 in demodulating the first and second symbols of interest to produce demodulated data 60. As non-limiting examples, the demodulated data 60 may be generated as hard decisions 62 or soft bit values (SBVs) 64.

In producing the symbol-specific amplitude references 58, the front-end receiver 50 uses at least one of shared correlation estimates 66 and shared combining weights 68, and symbol-specific net channel responses 70 (e.g., 70-1 for a first symbol of interest and 70-2 for a second symbol of interest). For example, the front-end receiver 50 computes the shared correlation estimates as code-averaged impairment correlation estimates nonparametrically or parametrically from pilot symbols included in the received signal 48, and uses the code-averaged impairment correlation estimates to compute combining weights and symbol-specific post-combining net channel responses 70-1 and 70-2 for the first and second symbol estimates 54-1 and 54-2, respectively.

Applying the basic structure of Fig. 4 to example processing details, the front-end receiver 50 implements a linear multi-user-detection (MUD) process in one or more embodiments. As is known, linear MUD (LMUD) can improve overall receiver performance and, assuming Nyquist pulse and chip-spaced channel taps, let v be a vector of receive samples from the received signal 48. After filtering matched to the pulse shape,

$$\mathbf{v} = \sum_n \left(\sqrt{P}\right) s_n \mathbf{h}_n + \sum_n \left(\sqrt{P}\right) i_n \mathbf{g}_n + \mathbf{n}, \qquad \text{Eq. (1)}$$

where $s_n$ is an n-th symbol of interest, which has a symbol-specific spreading code sequence associated with it, $\sqrt{P}$ is a traffic-to-pilot scaling factor to account for transmit power differences between a traffic channel carrying the $n$-th symbol of interest and a pilot channel from which, e.g., channel estimates are obtained. Further, $\mathbf{h}_n$ is a net channel response for the $n$-th symbol of interest, and $i_n$ and $\mathbf{g}_n$ are symbol value and net response, respectively, for a second set of symbols that are not jointly detected with $s_n$, and n is a noise component. Here we assume that $\mathbf{h}_n$ and $\mathbf{g}_n$ are scaled according to the pilot amplitude, and $\sqrt{P}$ is used to convert the scaling in accordance with the traffic channel. The received vector v can also be expressed as

$$\mathbf{v} = \mathbf{HAs} + \mathbf{GDi} + \mathbf{n}, \qquad \text{Eq. (2)}$$

where $\mathbf{H} = [\mathbf{h_0}, \mathbf{h_1}, ..., \mathbf{h}_{N_1-1}]$, $\mathbf{s} = (s_0, s_1, ..., s_{N_1-1})^T$, $\mathbf{G} = [\mathbf{g}_0, \mathbf{g}_1, ..., \mathbf{g}_{N_2-1}]$, $\mathbf{i} = (i_0, (i_1, ..., i_{N_2-1})^T$, $\mathbf{A} = \mathbf{D} = \sqrt{P}\mathbf{I}$, and $N_1$ and $N_2$ are the number of symbols included in s and i, respectively.

Let $\mathbf{B}$ be a front-end processor, e.g., the front-end receiver 50 of Fig. 4, to convert the received vector $\mathbf{v}$ to a new vector $\mathbf{z}$,

$$\mathbf{z} = \mathbf{B}^H \mathbf{v}. \qquad \text{Eq. (3)}$$

This generalization allows for both chip-level ($\mathbf{B} = \mathbf{I}$) and symbol-level ($\mathbf{B} = \mathbf{H}$) processing. In applying multi-user detection based on $\mathbf{z}$,

$$\hat{\mathbf{s}} = \mathbf{Mz}, \qquad \text{Eq. (4)}$$

where $\mathbf{M}$ is a matrix representing a linear MUD. For the symbol of interest, the detected value can be expressed as

$$\hat{s}_n = \mathbf{w}^H(n)\mathbf{z} \qquad \text{Eq. (5)}$$

where $\mathbf{w}^H(n)$ is the nth row of $\mathbf{M}$.

In Eq. (5), the combining weight vector $\mathbf{w}(n)$ for linear MUD is code specific, and thus the receive amplitude for the detected symbol $\hat{s}_n$ will vary from symbol to symbol according to the symbol-period, and code dependent spreading code. As noted in the "Background" section of this disclosure, the K. Yu et al. references teach applying scaled maximum likelihood (ML) combining weights before a QAM demodulation stage, where an ML detector for symbol $j$ uses combining weight $\mathbf{w}(j) = \sqrt{P}\mathbf{R}_j^{-1}\mathbf{h}_j$, where $\mathbf{R}_j$ is a symbol-specific impairment covariance matrix. With this formulation, the post-MUD symbol estimate is of the form $\hat{s}_j = \gamma_j s_j + u'$, where $u'$ is the impairment component and a symbol-specific amplitude reference for QAM demodulation is thus given by $\gamma_j = P\mathbf{h}_j^H \mathbf{R}_j^{-1} \mathbf{h}_j$. Disadvantageously, the receive amplitude calculation depends on the inverse of the symbol-specific impairment covariance matrix $\mathbf{R}_j$.

According to teachings presented herein, however, one can formulate an estimate for a symbol of interest as

$$\hat{s}_n = \mathbf{w}^H(n)\mathbf{B}^H\mathbf{HAs} + \mathbf{w}^H(n)\mathbf{B}^H\mathbf{GDi} + \mathbf{w}^H(n)\mathbf{B}^H\mathbf{n} = \lambda_n s_n + \eta_n, \qquad \text{Eq. (6)}$$

where $\lambda_n = \mathbf{w}^H(n)\mathbf{f}_n$, and $\mathbf{f}_n$ is the n-th column of $\mathbf{F} = \mathbf{B}^H\mathbf{HA}$, and where the symbol-specific noise variance is given as

$$\eta_n = \sum_{n' \neq n} \mathbf{w}^H(n)\mathbf{f}_{n'} s_{n'} + \mathbf{w}^H(n)\mathbf{B}^H\mathbf{GDi} + \mathbf{w}^H(n)\mathbf{B}^H\mathbf{n}.$$

Thus, $\lambda_n$ is the receive amplitude of $\hat{s}_n$. Using the "dual-max" approach, the bit log-likelihood ratio can be approximated by

$$LLR(b_n(l)) = \frac{1}{2\sigma_{\eta_n}^2} \{ \max_{s \in U_0(l)} [2\,\mathrm{Re}\{\lambda_n s \hat{s}_n^*\} - |s|^2 |\lambda_n|^2] -$$

$$\text{Eq. (7)}$$

$$\max_{s \in U_1(l)} [2\,\mathrm{Re}\{\lambda_n s \hat{s}_n^*\} - |s|^2 |\lambda_n|^2] \},$$

where $U_i(l)$ is the set of QAM symbols that has $l$-th bit equal to i. Both $\lambda_n$ and $\sigma_{\eta_n}^2$ in Eq. (7) are symbol-specific. However, one can average out the pseudo-random code in $\lambda_n$, $\sigma_{\eta_n}^2$, or both to reduce the receiver complexity. The traffic-to-pilot power ratio, P, can be estimated through, for example, code power estimation using known techniques.

If symbol-level linear MMSE MUD is considered, the front-end processor **B** represents Rake receiver (despreading and combining), **B** = **H**. Then, $\mathbf{z} = (z_0, z_1 ..., z_{N1-1})$, where $z_n$ is the Rake combined value corresponding to symbol $s_n$. In this case, Eq. (3) becomes $\mathbf{z} = \mathbf{H}^H\mathbf{HAs} + \mathbf{H}^H\mathbf{GDi} + \mathbf{H}^H\mathbf{n} = \mathbf{RAs} + \mathbf{VDi} + \mathbf{n}'$, where $\mathbf{R} = \mathbf{H}^H\mathbf{H}$, $\mathbf{V} = \mathbf{H}^H\mathbf{G}$, and $\mathbf{n}' = \mathbf{H}^H\mathbf{n}$, which has covariance $N_0\mathbf{R}$. Note that components of **R** and **V** are simply waveform cross-correlations. In this case, the linear MMSE MUD for detecting symbol $s_n$ is $w^H(n) = \mathbf{r}_n^H \mathbf{C}_z^{-1}$, where scaling factors (e.g., $\sqrt{P}$) are omitted for clarity, $r_n$ is the nth column of **R**, and where

$$\mathbf{C}_z = P\mathbf{RR}^H + P\mathbf{VV}^H + N_0\mathbf{R}. \qquad \text{Eq. (8)}$$

Thus, $\hat{s}_n = w^H(n)\mathbf{z} = \mathbf{r}_n^H \mathbf{C}_z^{-1}\mathbf{z} = \lambda_n s_n + \eta_n$, where the symbol-specific amplitude reference is

$$\lambda_n = \sqrt{P}\mathbf{r}_n^H \mathbf{C}_z^{-1} \mathbf{r}_n, \qquad \text{Eq. (9)}$$

and where the noise is $\eta_n = \sum_{i \neq n} \sqrt{P}\mathbf{r}_n^H \mathbf{C}_z^{-1}\mathbf{r}_i s_i + \sqrt{P}\mathbf{r}_n^H \mathbf{C}_z^{-1}\mathbf{Vi} + \mathbf{r}_n^H \mathbf{C}_z^{-1}\mathbf{n}'.$

Relating the above equations to Fig. 4, one sees that symbol estimates 54-1 and 54-2 for first and second symbols of interest are output from the front-end receiver 50 as $\hat{s}_1$ and $\hat{s}_2$, and that symbol-specific amplitude estimates 58-1 and 58-2 are output as $\lambda_1$ and $\lambda_2$, for $\hat{s}_1$ and $\hat{s}_2$, respectively. Thus, the demodulator 52 demodulates the first symbol of interest by demodulating $\hat{s}_1$ according to the defined modulation constellation 56, based on the symbol-specific amplitude reference $\lambda_1$, which in one or more embodiments comprises a numerical value proportional to received amplitude and can be used to scale $\hat{s}_1$ relative to the defined amplitudes of the modulation constellation 56. The same processing applies to $\hat{s}_2$, and the estimates $\hat{s}_n$ and corresponding symbol-specific amplitude references $\lambda_n$.

One further sees that the symbol-specific amplitude references $\lambda_n$ may be computed as a function of the inverse of the covariance matrix $\mathbf{C}_z$, which is shared (common) to the first and second symbols of interest. In this regard, $\mathbf{C}_z$ is in one or more embodiments the shared correlation estimates 66 used in the front-end receiver to compute the symbol-specific amplitude references $\lambda_n$.

Use of a symbol-specific amplitude reference $\hat{\lambda}_n$ enables the demodulator 52 to produce good hard (bit) decisions for the symbol estimate $\hat{s}_n$ corresponding to a given $n$-th symbol of interest $s_n$. If, on the other hand, the demodulator 52 is configured to produce soft bit values (e.g., SBVs 64) for further decoding processing, bit log-likelihood ratios (LLR's) are desired. Then, it is important to know both the amplitude and noise variance for the LMUD estimated $n$-th symbol $\hat{s}_n$. It can be shown that the symbol-specific noise variance for the $n$-th symbol of interest-i.e., the variance of the symbol-specific noise $\eta_n$, is

$$\sigma_{\eta_n}^2 = \lambda_n - \lambda_n^2. \qquad \text{Eq. (10)}$$

Using the dual-max formulation,

$$\text{LLR}(b_n(l)) = \max_{s \in U_0(l)}\left[\frac{1}{1-\lambda_n}\text{Re}\{s\hat{s}_j^*\} - \frac{\lambda_n|s|^2}{2(1-\lambda_n)}\right] -$$
$$\max_{s \in U_1(l)}\left[\frac{1}{1-\lambda_n}\text{Re}\{s\hat{s}_j^*\} - \frac{\lambda_n|s|^2}{2(1-\lambda_n)}\right]. \qquad \text{Eq. (11)}$$

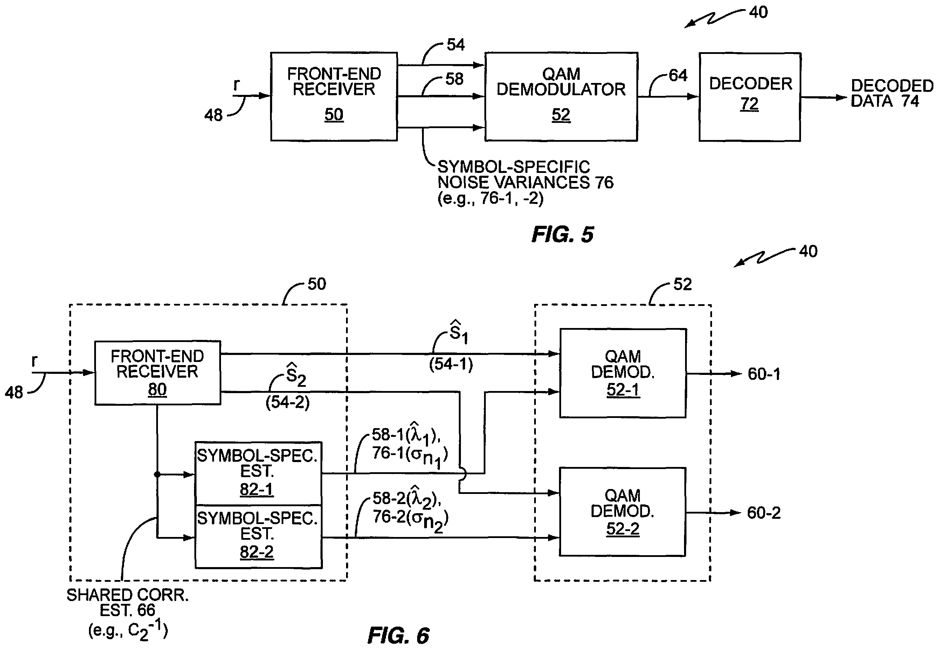

It can be seen that the computation of the symbol-specific receive amplitude reference in Eq. (9) and bit log-likelihood ratios in Eq. (11) only involves computing the inverse of matrix $\mathbf{C}_z$, which is common to all jointly detected symbols of interest according to Eq. (8). Fig. 5 illustrates this processing implementation, wherein the front-end receiver 50 produces symbol estimates 54 for some number of symbols of interest in a given symbol period. For example, the received signal 48 may be a multi-coded received DS-CDMA signal that includes two or more symbols of interest within the same symbol period, as separated by the use of different spreading/channelization code sequences, and the front-end receiver 50 may be configured as an LMUD receiver for jointly detecting such symbols. In this context, then, the front-end receiver 50 produces the symbol estimates 54, the corresponding symbol-specific amplitude references 58, and corresponding symbol-specific noise variances 76. More particularly, for a given $n$-th symbol of interest, the receiver front-end 50 produces the symbol estimate $\hat{s}_n$, a corresponding symbol-specific amplitude reference $\hat{\lambda}_n$, and a corresponding symbol-specific noise variance $\sigma_{\eta_n}^2$, for use in demodulating $s_n$ from the received signal 48. Such values are generated for any number of symbols detected from the received signal 48, and are updated from symbol period to symbol period, or as needed to reflect changing spreading/scrambling code sequences. The SBVs correspondingly produced by the demodulator 52 are decoded by decoder 72, to obtain decoded data 74.

Fig. 6 illustrates an LMUD implementation of the front-end receiver 50, illustrated as a front-end processor 80 performing LMUD detection of symbols 54-1 ($\hat{s}_1$) and 54-2 ($\hat{s}_2$) and symbol-specific estimation circuits 82-1 and 82-2. Estimation circuit 82-1 generates the symbol-specific amplitude reference 58-1 ($\hat{\lambda}_1$) and the symbol-specific noise variance 76-1 ($\sigma_{\eta_1}$) for use in demodulating symbol $s_1$ from the estimate $\hat{s}_1$. Estimation circuit 82-2 similarly generates the symbol-specific amplitude reference 58-2 ($\hat{\lambda}_2$) and the symbol-specific noise variance 76-2 ($\sigma_{\eta_2}$) for use in demodulating symbol $s_2$ from the estimate $\hat{s}_2$. Notably, as shown, the symbol-specific values are generated from $\mathbf{C}_z^{-1}$, which serves as the shared correlation estimates 66 introduced in Fig. 4, and from which the symbol-specific values are generated (along with symbol-specific net channel responses). Thus, the symbol-specific estimation circuits 82-1 and 82-2 share a common inversion matrix that is common to the symbols of interest being detected/demodulated.

If chip-level linear MMSE MUD is used, there is no need for preprocessing (via front-end processor 80), and thus $\mathbf{B=I}$, $\mathbf{F=HA}$, $\mathbf{f}_n = \sqrt{P}\mathbf{h}_n$. The linear MMSE MUD implementation of the receiver circuit based on selected chip samples v is

$$\mathbf{w}(n) = \mathbf{C}_v^{-1}\mathbf{h}_n \qquad \text{Eq. (12)}$$

where $\mathbf{C}_v = P\mathbf{H}\mathbf{H}^H + P\mathbf{G}\mathbf{G}^H + N_0\mathbf{I}$. Thus, the reference receive amplitude is $\lambda_n = \mathbf{w}^H(n)\mathbf{f}_n = \sqrt{P}\mathbf{h}_n^H\mathbf{C}_v^{-1}\mathbf{h}_n$. The noise component is

$$
\begin{aligned}
\eta_n &= \sum_{n'\neq n} \mathbf{w}^H(n)\mathbf{f}_{n'}s_{n'} + \mathbf{w}^H(n)\mathbf{G}\mathbf{i} + \mathbf{w}^H(n)\mathbf{n} \\
&= \sum_{n'\neq n} \sqrt{P}\mathbf{h}_n^H\mathbf{C}_v^{-1}\mathbf{h}_{n'}s_{n'} + \sqrt{P}\mathbf{h}_n^H\mathbf{C}_v^{-1}\mathbf{G}\mathbf{i} + \mathbf{h}_n^H\mathbf{C}_v^{-1}\mathbf{n}
\end{aligned}
\qquad \text{Eq. (13)}
$$

It can be shown that the variance of $\eta_n$ is $\sigma_{\eta_n}^2 = \lambda_n - \lambda_n^2$, thus, the bit log-likelihood value is the same as in Eq. (11).

The above LLR processing may be simplified in some embodiments of the receiver circuit 40, for example, by omitting from consideration received symbols not being jointly detected-symbols not of interest to the receiver circuit 40. In this case, the terms associated with $i_n$ in Eq. (1) are dropped and $\mathbf{C}_z \approx P\mathbf{R}\mathbf{R} + N_0\mathbf{R}$. Thus, the receive amplitude for symbol-level LMUD is

$$
\lambda_n = \sqrt{P}\mathbf{t}_n^H\mathbf{r}_n ,
\qquad \text{Eq. (14)}
$$

where $\mathbf{t}_n^H$ is the nth row of matrix $(P\mathbf{R} + N_0\mathbf{I})^{-1}$. Similar approximations can be made for chip-level LMUD.

As a further or alternative processing simplification, the receiver circuit 40 may employ further averaging out of pseudo-random codes in symbol-specific receive amplitude or noise variance estimates generated for received symbols of interest. In any case, from the preceding details, one sees that $\lambda_n$ improves QAM demodulation, particularly for higher-order QAM schemes, such as at or above 16-QAM. For symbol-level LMUD, $\lambda_n$ is determined in one or more embodiments by $\mathbf{C}_z$, which is a function of the waveform cross-correlation matrix $\mathbf{R}$. To ease the computation of $\mathbf{C}_z$, the receiver circuit 40 is configured in one or more embodiments to use the code averaged version of $\mathbf{R}$. It can be shown that averaging $\mathbf{R}$ over pseudo-random codes, the waveform correlation matrix can be approximated by $\tilde{\mathbf{R}} = \kappa\mathbf{I}$, where

$$
\kappa = \sum_{q=0}^{Q-1}\sum_{l_1=0}^{L-1}\sum_{l_2=0}^{L-1} g_q(l_1)g_q^*(l_2)R_p\left(\tau(l_1)-\tau(l_2)\right),
\qquad \text{Eq. (15)}
$$

where $Q$ is the number of receive antennas, $q$ is used to index receive antenna, $g_q(l)$ and $\tau(l)$ are the complex-valued channel coefficient and delay for the $l$-th path, and $R_p(t)$ is the chip waveform autocorrelation function. For chip-spaced channels, Eq. (15) reduces to

$$
\kappa = \sum_{q=0}^{Q-1}\sum_{l=0}^{L-1} |g_q(l)|^2 .
\qquad \text{Eq. (16)}
$$

Using the code-averaged version of $\mathbf{R}$ in $\mathbf{C}_z$, $\lambda_n$ can be approximated by

$$
\tilde{\lambda}_n = \sqrt{P}\sum_{n'} \frac{|R(n,n')|^2}{P\kappa^2 + N_0\kappa} ,
\qquad \text{Eq. (17)}
$$

where $R(n_1,n_2)$ is the $(n_1,n_2)$ element of $\mathbf{R}$. One can further average out the pseudo-random code in the symbol-specific net channel response $\mathbf{r}_n$, thus

$$\tilde{\tilde{\lambda}}_n = \sqrt{P} \sum_{n'} \frac{|E[R(n,n')]|^2}{Pw^2 + N_0\kappa} = \frac{\sqrt{P}\kappa}{P\kappa + N_0}. \qquad \text{Eq. (18)}$$

Alternatively, one can use $E[|R(n,n')|^2]$ in the numerator of Eq. (17) as

$$\tilde{\tilde{\lambda}}'_n = \sqrt{P} \sum_{n'} \frac{E[|R(n,n')|^2]}{P\kappa^2 + N_0\kappa}. \qquad \text{Eq. (19)}$$

$E[|R(n,n')|^2]$ can be obtained through time averaging. Similar approximations can be made for chip-level LMUD.

Broadly, the front-end receiver circuit 50 uses spreading code knowledge when forming an amplitude reference for QAM demodulation by the demodulator 52. The immediately preceding details stepped through the use of such knowledge in LMUD embodiments of the receiver circuit 40. In at least one such embodiment, processing by the receiver circuit 40 is characterized by generating first and second symbol estimates 54-1 and 54-2 for first and second symbols of interest in an LMUD process that includes computing the shared correlation estimates 66 as code-averaged correlation estimates, and combining signal values for the first symbol and for the second symbol according to combining weights w derived from the code-averaged correlation estimates 66, to generate the first and second symbol estimates 54-1 and 54-2, respectively.

Such processing is, in one or more embodiments, characterized by demodulating the first and second symbols according to a defined amplitude-based modulation constellation 56, as a function of the first and second symbol estimates 54-1 and 54-2, and the corresponding symbol-specific amplitude references 58-1 and 58-2. Such processing may be further characterized by deriving symbol-specific noise variance estimates 76-1 and 76-2, wherein demodulating the first and second symbols comprises generating soft values representing the first and second symbols as a function of the first and second symbol estimates 54-1 and 54-2, the symbol-specific amplitude references 58-1 and 58-2, and the symbol-specific noise variance estimates 76-1 and 76-2. (Of course, such processing may be done for a fewer or greater number of symbols of interest, within any given one or more defined symbol intervals.)

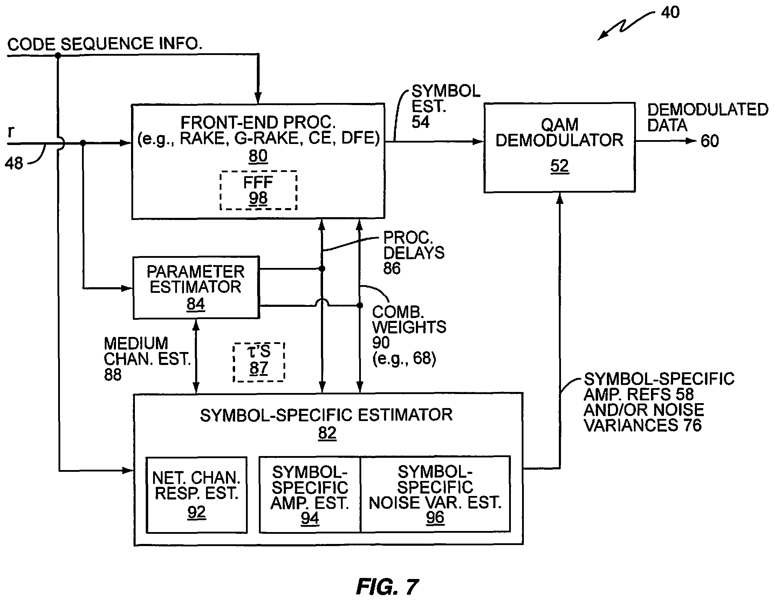

Turning from specific LMUD examples, it should be understood that the demodulation teachings presented herein apply to any linear DS-CDMA demodulator, such as Rake, G-Rake, or chip equalizer (CE), and to nonlinear demodulators that employ a linear filter, such as a decision feedback equalizer (DFE). Fig. 7 illustrates this broad applicability, where the front-end receiver circuit 50 of the receiver circuit 40 is illustrated as comprising the front-end processor 80 introduced in Fig. 6, a symbol-specific estimator 82, and a parameter estimator 84.

In at least one embodiment, the front-end receiver circuit 50 within the receiver circuit 40 is implemented as a G-Rake or CE receiver front-end. With G-Rake and CE receivers, symbol estimates are obtained in a combining process using combining weights w, which can be applied before despreading (chip equalization) or after despreading (G-Rake).

In at least one such embodiment, the receiver circuit 40 implements a processing method characterized by generating first and second symbol estimates, e.g., for first and second symbols received in the same symbol period, in a G-Rake or CE combining process that includes computing the shared correlation estimates and/or the shared combining weights based on computing shared correlation estimates as code-averaged correlation estimates, and combining signal values for the first symbol and for the second symbol according to combining weights derived from the code-averaged correlation estimates. Such processing in one or more embodiments is further characterized by demodulating the first and second symbols according to a defined amplitude-based modulation constellation as a function of the first and second symbol estimates and the symbol-specific amplitude references.

The combining weights, or later scaling, normalize the noise power on symbol estimates to unity. For example, for G-Rake, the despread values for spreading code $n$ can be modeled as

$$\mathbf{x}_n = \sqrt{P}\bar{\mathbf{h}}s_n + \mathbf{n}_n \qquad \text{Eq. (20)}$$

where $\bar{\mathbf{h}}$ is the code-averaged net channel response, $s_n$ is the symbol of interest and $\mathbf{n}_n$ is the impairment. The average net response at delay $d$ and receive antenna $a$ can be computed as

$$\bar{h}_a(d) = \sum_{l=0}^{L-1} g_a(l) R_p \left( d - \tau_a(l) \right) \qquad \text{Eq. (21)}$$

where the medium response (transmitter to receiver) is modeled as $L$ taps with medium coefficients $g_a(\lambda)$ and path delays $\tau_a(\lambda)$. The medium response can be estimated from a pilot channel, pilot symbols, or data symbols with detected symbol values using known techniques. The term $R_p(t)$ is the convolution of the transmit and receive filters (e.g., pulse shaping filters at the base station 14 and at the mobile station 18), which can be approximated by the known chip pulse shape autocorrelation function.

The output of the equalizer-e.g., the Rake-combined signal provided for the n-th symbol of interest-can be expressed as

$$z_n = \sqrt{P} \mathbf{w}^H \bar{\mathbf{h}} s_n + \mathbf{w}^H \mathbf{n}_n = \bar{\lambda} s_n + e_n \qquad \text{Eq. (22)}$$

where $\bar{\lambda}$ is a code-averaged amplitude value and $e_k$ is the error. The code-averaged amplitude can be computed as

$$\bar{\lambda} = \sqrt{P} \mathbf{w}^H \bar{\mathbf{h}} \qquad \text{Eq. (23)}$$

The weight vector can be computed directly using adaptive filtering techniques and a reference signal, such as the known pilot chip values or symbol values. It can also be computed indirectly, using an impairment or data covariance and a channel estimate. The covariance can be estimated parametrically, using channel estimates and noise and signal powers, or nonparametrically, using impairment or data samples from pilot symbols or unused codes.

Usually the weights $\mathbf{w}$ are designed to make the power in the error equal to one or a constant. Thus, QAM demodulation, both hard and soft decision, is mainly concerned with the amplitude reference. However, according to the demodulation teachings presented herein, the receiver circuit 40 accounts for symbol-specific spreading codes by using a symbol-specific net response $\mathbf{h}_n$, which depends on the aperiodic autocorrelation function of the code sequence used for transmitting the $n$-th symbol of interest in a given symbol interval. (As noted, because of (long) scrambling code use, the product of the symbol-specific spreading/channelization code and the scrambling code changes between symbol transmission intervals at the base station 14, or at the mobile station 18.)

Thus, a more accurate model for the despread values to be processed within a Generalized Rake receiver implementation of the front-end processor 80 is given as

$$\mathbf{x}_n = \sqrt{P} \mathbf{h}_n s_n + \mathbf{n}_n \qquad \text{Eq. (24)}$$

Based on the analysis in G. E. Bottomley, T. Ottosson, and Y.-P. E. Wang, "A generalized RAKE receiver for interference suppression," IEEE J. Selected Areas Commun., vol. 18, no. 8, Aug. 2000, for example, the symbol-specific response at delay $d$ and receive antenna $a$ for symbol/code $n$ can be computed as

$$h_{a,n}(d) = \sum_{\ell=0}^{L-1} g_a(\ell) \sum_{m=1-N}^{N} C_n(m) R_p \left( d - \tau_a(\ell) + m T_c \right) \qquad \text{Eq. (25)}$$

where $C_n(m)$ is the spreading code aperiodic autocorrelation function for the symbol-specific code sequence $n$. This aperiodic autocorrelation function can, as shown in the Bottomley, et al. reference, be computed using the spreading code chip values according to

$$C_n(m) = \begin{cases} \displaystyle\sum_{m=0}^{N-1-m} c_n(k)c_n^*(k+m), & 0 \le m \le N-1 \\ \displaystyle\sum_{m=0}^{N-1+m} c_n(k-m)c_n^*(k), & 1-N \le m < M \end{cases} \qquad \text{Eq. (26)}$$

where $N$ is the spreading factor. The symbol-specific amplitude reference can then be computed as

$$\lambda_n = \sqrt{P}\mathbf{w}^H\mathbf{h_n} . \qquad \text{Eq. (27)}$$

Referring again to Fig. 7, the received signal 48 is used by the parameter estimator 84 to determine processing delays 86 ($d$'s), path delays 87 ($\tau$'s), medium channel coefficients 88 ($g$'s) and the combining weights 90 ($\mathbf{w}$). (The combining weights 90 may be generated as the shared, common combining weights 68 detailed earlier.) As is known, the path delays 87 may be estimated by correlation processing or by otherwise generating a Power Delay Profile (PDP) for the received signal 48. Further, as is known, the processing delays 86 may be determined as the path delays 87, plus one or more additional delay offsets relative to the path delays 87, that are useful for collecting desired signal energy and/or collecting interfering signal energy (for characterization and suppression).

The processing delays 86 and combining weights 90 are used in the G-Rake (or chip equalizer) implementations of the front-end processor 80 to Rake-combine symbol-level (or chip-level) signal values derived from the received signal 48 for each symbol of interest. The front-end processor 80 also uses spreading code information, but only for the purpose of despreading the received signal 48. The symbol-specific estimation circuit 82 uses spreading code values to form the aperiodic autocorrelation function for each symbol of interest, and this function is used along with path delays and medium coefficients to form a code-specific net responses for the symbols of interest, e.g., to form $\mathbf{h}_n$ for the symbol $s_n$.

The symbol-specific net response $\mathbf{h}_n$ is then used with the combining weights 90 to form the estimated code-specific amplitude reference $\hat{\lambda}_n$. Note, however, that these operations involve multiplications and additions, and they can be grouped differently, so as not to necessarily form the intermediate quantities listed above. However, in general, the symbol-specific amplitude reference $\hat{\lambda}_n$ is formed using knowledge of the spreading code or, more broadly, the applicable code sequence, for a particular symbol of interest. Note, too, that the $\mathbf{h}_n$ representation of the symbol-specific net channel response is similar to $\mathbf{r}_n$ shown in Eq. (9), for example. There, however, the symbol-specific net channel response $\mathbf{r}_n$ additionally accounted for code cross-correlations (arising in joint, multi-user detection), along with accounting for code autocorrelations.

In supporting the above processing, the symbol-specific estimation circuit 82 comprises, in one or more embodiments, a net channel response estimator 92, to form the net channel responses $\mathbf{h}_n$'s, as a function of the medium channel responses 88 and the spreading code sequence information for the symbols of interest. (Such code sequence information may be provided by higher-level processing functions in the processing circuits 38 of the mobile station 18, such as shown in Fig. 2.) The symbol-specific estimation circuit 82 may further include a symbol-specific amplitude estimator 94, to generate the symbol-specific amplitude references 58 as a function of the symbol-specific net channel responses provided by the net channel response estimator 92, and the previously describe shared correlation estimates 66 and/or shared combining weights 68. In turn, a symbol-specific noise variance estimator 96 generates the symbol-specific noise variances 76 as a function of the symbol-specific amplitude references 58. All such functions within the symbol-specific amplitude estimation circuit 82 may be implemented via hardware, software, or both, within the digital processing circuits 38 of the mobile station 18. It should be understood, then, that the illustrated processing circuits are non-limiting example implementations, subject to variation as needed or desired.

As example of such variation, it was noted that the front-end processor 80 can be implemented as a DFE circuit. The DFE circuit includes a feedforward filter (FFF) circuit 98 that uses combining weights $\mathbf{w}$, which may be shared for two or more symbols of interest. Further, the inputs to the FFF can be modeled according to Eq. (24), so that symbol-specific amplitude references can be estimated using Eq. (27). Such estimation also can be used in the context of an otherwise conventional Rake receiver, which may be viewed as a special case of the G-Rake receiver.

**Claims**

1.   A method of processing a received Direct Sequence Code Division Multiple Access, "DS-CDMA", signal that includes amplitude-modulated first and second symbols of interest, which first and second symbols are sent in parallel via different code sequences during a same symbol interval, the method comprising:

generating at least one of shared correlation estimates and shared combining weights derived from the shared correlation estimates, which shared correlation estimates are in common for the first and second symbols and are formed from cross correlations between respective symbol waveforms for the first and second symbols, wherein said shared correlation estimates and shared combining weights are generated by processing the received DS-CDMA signal;

determining symbol-specific net channel responses for the first and second symbols; and

computing symbol-specific amplitude references for the first and second symbols as a function of symbol-specific net channel responses and the at least one of the shared correlation estimates and the shared combining weights.

2. The method of claim 1, further **characterized in that** determining the symbol-specific net channel responses for the first and second symbols comprises computing first and second symbol-specific net responses for the first and second symbols based on aperiodic autocorrelation functions of first and second spreading code sequences used in transmitting the first and second symbols, respectively.

3. The method of claim 1, further **characterized in that** generating the at least one of the shared correlation estimates and the shared combining weights comprises generating shared correlation estimates as one of code-averaged impairment or data correlation estimates that are not specific to either the first or second symbol, or as code-specific data correlation estimates from the received DS-CDMA signal that depend on both the first and second symbols.

4. The method of claim 3, further **characterized in that** computing the symbol-specific amplitude references for the first and second symbols comprises computing the symbol-specific amplitude references as a function of symbol-specific net channel responses and the shared correlation estimates.

5. The method of claim 3, further **characterized by** deriving combining weights from the shared correlation estimates and computing the symbol-specific amplitude references as a function of the symbol-specific net channel responses and the combining weights.

6. The method of claim 1, further **characterized in that** generating the at least one of the shared correlation estimates and the shared combining weights comprises adaptively estimating shared combining weights in common for the first and second symbols via an adaptive filtering process, and computing the symbol-specific amplitude references as a function of the symbol-specific net channel responses and the shared combining weights.

7. The method of claim 1, further **characterized by** generating first and second symbol estimates for the first and second symbols in a Generalized Rake or chip equalization combining process that includes generating the at least one of shared correlation estimates and shared combining weights in common for the first and second symbols by computing shared correlation estimates as code-averaged correlation estimates, and includes combining signal values for the first symbol and for the second symbol according to combining weights derived from the code-averaged correlation estimates.

8. The method of claim 7, further **characterized by** demodulating the first and second symbols according to a defined amplitude-based modulation constellation as a function of the first and second symbol estimates and the symbol-specific amplitude references.

9. The method of claim 1, further **characterized by** generating first and second symbol estimates for the first and second symbols in a linear multi-user-detection (MUD) process that includes generating the at least one of shared correlation estimates and shared combining weights in common for the first and second symbols by computing shared correlation estimates as code-specific correlation estimates that depend on the first and second symbols, and includes combining signal values for the first symbol and for the second symbol according to combining weights derived from the code-specific correlation estimates, to generate the first and second symbol estimates, respectively.

10. The method of claim 9, further **characterized by** demodulating the first and second symbols according to a defined amplitude-based modulation constellation as a function of the first and second symbol estimates and the symbol-specific amplitude references.

11. The method of claim 10, further **characterized by** deriving symbol-specific noise variance estimates, and wherein demodulating the first and second symbols comprises generating soft values representing the first and second symbols as a function of the first and second symbol estimates, the symbol-specific amplitude references, and the symbol-specific noise variance estimates.

12. A receiver circuit configured for processing a received Direct Sequence Code Division Multiple Access. "DS-CDMA", signal that includes amplitude-modulated first and second symbols of interest which first and second symbols are sent in parallel via different code sequences during a same symbol interval, the receiver circuit comprising one or more processing circuits configured to:

   generate at least one of shared correlation estimates and shared combining weights derived from the shared correlation estimates, which shared correlation estimates are in common for the first and second symbols and are formed from cross correlations between respective symbol waveforms for the first and second symbols, wherein said shared correlation estimates and shared combining weights are generated by processing the received DS-CDMA signal;
   determine symbol-specific net channel responses for the first and second symbols; and
   compute symbol-specific amplitude references for the first and second symbols as a function of symbol-specific net channel responses and the at least one of the shared correlation estimates and the shared combining weights.

13. The receiver circuit of claim 12, further **characterized in that** the receiver circuit is configured to determine the symbol-specific net channel responses for the first and second symbols by computing first and second symbol-specific net responses for the first and second symbols based on aperiodic autocorrelation functions of first and second spreading code sequences used in transmitting the first and second symbols, respectively.

14. The receiver circuit of claim 12, further **characterized in that** the receiver circuit is configured to generate the at least one of the shared correlation estimates and the shared combining weights by generating shared correlation estimates as one of code-averaged correlation estimates that are not specific to either the first or second symbol, or as code-specific correlation data correlations that depend on both the first and second symbols.

15. The receiver circuit of claim 14, further **characterized in that** the receiver circuit is configured to compute the symbol-specific amplitude references for the first and second symbols by computing the symbol-specific amplitude references as a function of symbol-specific net channel responses and the shared correlation estimates.

16. The receiver circuit of claim 14, further **characterized in that** the receiver circuit is configured to derive combining weights from the shared correlation estimates and compute the symbol-specific amplitude references as a function of the symbol-specific net channel responses and the combining weights.

17. The receiver circuit of claim 12, further **characterized in that** the receiver circuit is configured to generate the at least one of the shared correlation estimates and the shared combining weights by adaptively estimating shared combining weights in common for the first and second symbols via an adaptive filtering process, and computing the symbol-specific amplitude references as a function of the symbol-specific net channel responses and the shared combining weights.

18. The receiver circuit of claim 12, further **characterized in that** the receiver circuit is configured to generate first and second symbol estimates for the first and second symbols in a Generalized Rake or chip equalization combining process that includes generating the at least one of shared correlation estimates and shared combining weights in common for the first and second symbols by computing shared correlation estimates as code-averaged correlation estimates, and includes combining signal values for the first symbol and for the second symbol according to combining weights derived from the code-averaged correlation estimates.

19. The receiver circuit of claim 18, further **characterized in that** the receiver circuit is configured to demodulate the first and second symbols according to a defined amplitude-based modulation constellation as a function of the first and second symbol estimates and the symbol-specific amplitude references.

20. The receiver circuit of claim 12, further **characterized in that** the receiver circuit is configured to generate first and second symbol estimates for the first and second symbols in a linear multi-user-detection (MUD) process that includes generating the at least one of shared correlation estimates and shared combining weights in common for the first and second symbols by computing shared correlation estimates as code-specific correlation estimates, and includes combining signal values for the first symbol and for the second symbol according to combining weights derived from the code-specific correlation estimates, to generate the first and second symbol estimates, respectively.

21. The receiver circuit of claim 20, further **characterized in that** the receiver circuit is configured to demodulate the first and second symbols according to a defined amplitude-based modulation constellation as a function of the first and second symbol estimates and the symbol-specific amplitude references.

22. The receiver circuit of claim 21, further **characterized in that** the receiver circuit is configured to derive symbol-specific noise variance estimates, and to demodulate the first and second symbols by generating soft values representing the first and second symbols as a function of the first and second symbol estimates, the symbol-specific amplitude references, and the symbol-specific noise variance estimates.

23. The receiver circuit of claim 12, wherein the one or more processing circuits include a front-end processor configured to generate the symbol-specific amplitude references and to generate first and second symbol estimates for the first and second symbols, and a demodulation processor configured to demodulate the first and second symbols according to a defined amplitude-based modulation constellation as a function of the first and second symbol estimates and the symbol-specific amplitude references.

24. The receiver circuit of claim 23, wherein the front-end processor comprises one of a Rake-based equalization processor, a decision feedback equalization processor, or a chip equalization processor.

25. The receiver circuit of claim 23, wherein the front-end processor comprises a linear multi-user-detection (MUD) processor configured to generate the at least one of shared correlation estimates and shared combining weights in common for the first and second symbols by generating shared correlation estimates common to the first and second symbols as a function of spreading waveform cross-correlations, and configured to generate the symbol-specific amplitude references from the shared correlation estimates or from combining weights derived from the shared correlation estimates.

**Patentansprüche**

1. Verfahren zum Verarbeiten eines empfangenen Direktsequenz(DS)-Codemultiplex-Vielfachzugriff(CDMA)-Signals, das amplitudenmodulierte erste und zweite Symbole von Interesse einschließt, welche ersten und zweiten Symbole während eines gleichen Symbolintervalls über verschiedene Codesequenzen parallel gesendet werden, wobei das Verfahren Folgendes umfasst:

Erzeugen von mindestens einer von gemeinsamen Korrelationsschätzungen und gemeinsamen Kombinationsgewichten, die von den gemeinsamen Korrelationsschätzungen abgeleitet sind, welche gemeinsamen Korrelationsschätzungen für die ersten und zweiten Symbole gleich sind und aus Kreuzkorrelationen zwischen jeweiligen Symbol-Wellenformen für die ersten und zweiten Symbole geformt werden, worin die gemeinsamen Korrelationsschätzungen und gemeinsamen Kombinationsgewichte erzeugt werden, indem das empfangene DS-CDMA-Signal verarbeitet wird;
Bestimmen von symbolspezifischen Netto-Kanalantworten für die ersten und zweiten Symbole; und
Berechnen von symbolspezifischen Amplitudenreferenzen für die ersten und zweiten Symbole als eine Funktion von symbolspezifischen Netto-Kanalantworten und die mindestens eine der gemeinsamen Korrelationsschätzungen und der gemeinsamen Kombinationsgewichte.

2. Verfahren nach Anspruch 1, außerdem **dadurch gekennzeichnet, dass** das Bestimmen der symbolspezifischen Netto-Kanalantworten für die ersten und zweiten Symbole Folgendes umfasst: das Berechnen von ersten und zweiten symbolspezifischen Nettoantworten für die ersten und zweiten Symbole, auf aperiodischen Autokorrelationsfunktionen von ersten und zweiten Spreizcodesequenzen basierend, die beim Übertragen der ersten bzw. zweiten Symbole verwendet werden.

3. Verfahren nach Anspruch 1, außerdem **dadurch gekennzeichnet, dass** das Erzeugen der mindestens einen der gemeinsamen Korrelationsschätzungen und der gemeinsamen Kombinationsgewichte das Erzeugen von gemeinsamen Korrelationsschätzungen als eins von code-gemittelten Beeinträchtigungs- oder Daten-Korrelationsschätzungen umfasst, die weder für das erste noch für das zweite Symbol spezifisch sind, oder als code-spezifische Daten-Korrelationsschätzungen vom empfangenen DS-CDMA-Signal, die sowohl von den ersten als auch den zweiten Symbolen abhängen.

**4.** Verfahren nach Anspruch 3, außerdem **dadurch gekennzeichnet, dass** das Berechnen der symbolspezifischen Amplitudenreferenzen für die ersten und zweiten Symbole das Berechnen der symbolspezifischen Amplitudenreferenzen als eine Funktion von symbolspezifischen Netto-Kanalantworten und den gemeinsamen Korrelationsschätzungen umfasst.

**5.** Verfahren nach Anspruch 3, außerdem **gekennzeichnet durch** Ableiten von Kombinationsgewichten aus den gemeinsamen Korrelationsschätzungen und Berechnen der symbolspezifischen Amplitudenreferenzen als eine Funktion der symbolspezifischen Netto-Kanalantworten und der Kombinationsgewichte.

**6.** Verfahren nach Anspruch 1, außerdem **dadurch gekennzeichnet, dass** das Erzeugen der mindestens einen der gemeinsamen Korrelationsschätzungen und der gemeinsamen Kombinationsgewichte Folgendes umfasst: das adaptive Schätzen von gemeinsamen Kombinationsgewichten gleichermaßen für die ersten und zweiten Symbole über einen adaptiven Filterungsprozess und das Berechnen der symbolspezifischen Amplitudenreferenzen als eine Funktion der symbolspezifischen Netto-Kanalantworten und der gemeinsamen Kombinationsgewichte.

**7.** Verfahren nach Anspruch 1, außerdem **gekennzeichnet durch** Erzeugen von ersten und zweiten Symbolschätzungen für die ersten und zweiten Symbole in einem verallgemeinerten Rake- oder Chipentzerrungs-Kombinationsprozess, der das Erzeugen der mindestens einen von gemeinsamen Korrelationsschätzungen und gemeinsamen Kombinationsgewichten gleichermaßen für die ersten und zweiten Symbole einschließt, indem gemeinsame Korrelationsschätzungen als code-gemittelte Korrelationsschätzungen berechnet werden, und das Kombinieren von Signalwerten für das erste Signal und für das zweite Symbol gemäß Kombinationsgewichten einschließt, die von den code-gemittelten Korrelationsschätzungen abgeleitet sind.

**8.** Verfahren nach Anspruch 7, außerdem **gekennzeichnet durch** Demodulieren der ersten und zweiten Symbole gemäß einer definierten amplitudenbasierten Modulationskonstellation als eine Funktion der ersten und zweiten Symbolschätzungen und der symbolspezifischen Amplitudenreferenzen.

**9.** Verfahren nach Anspruch 1, außerdem **gekennzeichnet durch** Erzeugen von ersten und zweiten Symbolschätzungen für die ersten und zweiten Symbole in einem linearen Mehrbenutzerdetektion(MUD)-Prozess, der das Erzeugen der mindestens einen der gemeinsamen Korrelationsschätzungen und gemeinsamen Kombinationsgewichte gleichermaßen für die ersten und zweiten Symbole einschließt, indem gemeinsame Korrelationsschätzungen als code-spezifische Korrelationsschätzungen berechnet werden, die von den ersten und zweiten Symbolen abhängen, und das Kombinieren von Signalwerten für das erste Symbol und für das zweite Symbole gemäß Kombinationsgewichten einschließt, die von den code-spezifischen Korrelationsschätzungen abgeleitet sind, um die ersten bzw. zweiten Symbolschätzungen zu erzeugen.

**10.** Verfahren nach Anspruch 9, außerdem **gekennzeichnet durch** Demodulieren der ersten und zweiten Symbole gemäß einer definierten amplitudenbasierten Modulationskonstellation als eine Funktion der ersten und zweiten Symbolschätzungen und der symbolspezifischen Amplitudenreferenzen.

**11.** Verfahren nach Anspruch 10, außerdem **gekennzeichnet durch** Ableiten von symbolspezifischen Rauschvarianzschätzungen und worin das Demodulieren der ersten und zweiten Symbole das Erzeugen von weichen Werten umfasst, die die ersten und zweiten Symbole als eine Funktion der ersten und zweiten Symbolschätzungen, der symbolspezifischen Amplitudenreferenzen und der symbolspezifischen Rauschvarianzschätzungen repräsentieren.

**12.** Empfängerschaltung, konfiguriert zum Verarbeiten eines empfangenen Direktsequenz(DS)-Codemultiplex-Vielfachzugriff(CDMA)-Signals, das amplitudenmodulierte erste und zweite Symbole von Interesse einschließt, welche ersten und zweiten Symbole während eines gleichen Symbolintervalls über verschiedene Codesequenzen parallel gesendet werden, wobei die Empfängerschaltung eine oder mehrere Verarbeitungsschaltungen umfasst, die konfiguriert sind zum:

Erzeugen von mindestens einer von gemeinsamen Korrelationsschätzungen und gemeinsamen Kombinationsgewichten, die von den gemeinsamen Korrelationsschätzungen abgeleitet sind, welche gemeinsamen Korrelationsschätzungen für die ersten und zweiten Symbole gleich sind und aus Kreuzkorrelationen zwischen jeweiligen Symbol-Wellenformen für die ersten und zweiten Symbole geformt werden, worin die gemeinsamen Korrelationsschätzungen und gemeinsamen Kombinationsgewichte erzeugt werden, indem das empfangene DS-CDMA-Signal verarbeitet wird;
Bestimmen von symbolspezifischen Netto-Kanalantworten für die ersten und zweiten Symbole; und

Berechnen von symbolspezifischen Amplitudenreferenzen für die ersten und zweiten Symbole als eine Funktion von symbolspezifischen Netto-Kanalantworten und die mindestens eine der gemeinsamen Korrelationsschätzungen und der gemeinsamen Kombinationsgewichte.

13. Empfängerschaltung nach Anspruch 12, außerdem **dadurch gekennzeichnet, dass** die Empfängerschaltung konfiguriert ist zum Bestimmen der symbolspezifischen Netto-Kanalantworten für die ersten und zweiten Symbole durch Berechnen von ersten und zweiten symbolspezifischen Nettoantworten für die ersten und zweiten Symbole, auf aperiodischen Autokorrelationsfunktionen von ersten und zweiten Spreizcodesequenzen basierend, die beim Übertragen der ersten bzw. zweiten Symbole verwendet werden.

14. Empfängerschaltung nach Anspruch 12, außerdem **dadurch gekennzeichnet, dass** die Empfängerschaltung konfiguriert ist zum Erzeugen der mindestens einen der gemeinsamen Korrelationsschätzungen und der gemeinsamen Kombinationsgewichte durch Erzeugen von gemeinsamen Korrelationsschätzungen als eins von code-gemittelten Korrelationsschätzungen, die weder für das erste noch für das zweite Symbol spezifisch sind, oder als code-spezifische Korrelationsdatenschätzungen, die sowohl von den ersten als auch den zweiten Symbolen abhängen.

15. Empfängerschaltung nach Anspruch 14, außerdem **dadurch gekennzeichnet, dass** die Empfängerschaltung konfiguriert ist zum Berechnen der symbolspezifischen Amplitudenreferenzen für die ersten und zweiten Symbole durch Berechnen der symbolspezifischen Amplitudenreferenzen als eine Funktion von symbolspezifischen Netto-Kanalantworten und den gemeinsamen Korrelationsschätzungen.

16. Empfängerschaltung nach Anspruch 14, außerdem **dadurch gekennzeichnet, dass** die Empfängerschaltung konfiguriert ist zum Ableiten von Kombinationsgewichten aus den gemeinsamen Korrelationsschätzungen und Berechnen der symbolspezifischen Amplitudenreferenzen als eine Funktion der symbolspezifischen Netto-Kanalantworten und der Kombinationsgewichte.

17. Empfängerschaltung nach Anspruch 12, außerdem **dadurch gekennzeichnet, dass** die Empfängerschaltung konfiguriert ist zum Erzeugen der mindestens einen der gemeinsamen Korrelationsschätzungen und der gemeinsamen Kombinationsgewichte durch adaptives Schätzen von gemeinsamen Kombinationsgewichten gleichermaßen für die ersten und zweiten Symbole über einen adaptiven Filterungsprozess und Berechnen der symbolspezifischen Amplitudenreferenzen als eine Funktion der symbolspezifischen Netto-Kanalantworten und der gemeinsamen Kombinationsgewichte.

18. Empfängerschaltung nach Anspruch 12, außerdem **dadurch gekennzeichnet, dass** die Empfängerschaltung konfiguriert ist zum Erzeugen von ersten und zweiten Symbolschätzungen für die ersten und zweiten Symbole in einem verallgemeinerten Rake- oder Chipentzerrungs-Kombinationsprozess, der das Erzeugen der mindestens einen von gemeinsamen Korrelationsschätzungen und gemeinsamen Kombinationsgewichten gleichermaßen für die ersten und zweiten Symbole einschließt, indem gemeinsame Korrelationsschätzungen als code-gemittelte Korrelationsschätzungen berechnet werden, und das Kombinieren von Signalwerten für das erste Signal und für das zweite Symbol gemäß den Kombinationsgewichten einschließt, die von den code-gemittelten Korrelationsschätzungen abgeleitet sind.

19. Empfängerschaltung nach Anspruch 18, außerdem **dadurch gekennzeichnet, dass** die Empfängerschaltung konfiguriert ist zum Demodulieren der ersten und zweiten Symbole gemäß einer definierten amplitudenbasierten Modulationskonstellation als eine Funktion der ersten und zweiten Symbolschätzungen und der symbolspezifischen Amplitudenreferenzen.

20. Empfängerschaltung nach Anspruch 12, außerdem **dadurch gekennzeichnet, dass** die Empfängerschaltung konfiguriert ist zum Erzeugen von ersten und zweiten Symbolschätzungen für die ersten und zweiten Symbole in einem linearen Mehrbenutzerdetektion(MUD)-Prozess, der das Erzeugen der mindestens einen von gemeinsamen Korrelationsschätzungen und gemeinsamen Kombinationsgewichten gleichermaßen für die ersten und zweiten Symbole einschließt, indem gemeinsame Korrelationsschätzungen als code-spezifische Korrelationsschätzungen berechnet werden, und das Kombinieren von Signalwerten für das erste Symbol und für das zweite Symbole gemäß Kombinationsgewichten einschließt, die von den code-spezifischen Korrelationsschätzungen abgeleitet sind, um die ersten bzw. zweiten Symbolschätzungen zu erzeugen.

21. Empfängerschaltung nach Anspruch 20, außerdem **dadurch gekennzeichnet, dass** die Empfängerschaltung konfiguriert ist zum Demodulieren der ersten und zweiten Symbole gemäß einer definierten amplitudenbasierten Modulationskonstellation als eine Funktion der ersten und zweiten Symbolschätzungen und der symbolspezifischen Amplitudenreferenzen.

22. Empfängerschaltung nach Anspruch 21, außerdem **dadurch gekennzeichnet, dass** die Empfängerschaltung konfiguriert ist zum Ableiten von symbolspezifischen Rauschvarianzschätzungen und zum Demodulieren der ersten und zweiten Symbole durch Erzeugen von weichen Werten, die die ersten und zweiten Symbole als eine Funktion der ersten und zweiten Symbolschätzungen, der symbolspezifischen Amplitudenreferenzen und der symbolspezifischen Rauschvarianzschätzungen repräsentieren.

23. Empfängerschaltung nach Anspruch 12, worin die eine oder die mehreren Verarbeitungsschaltungen einen Front-End-Prozessor einschließen, konfiguriert zum Erzeugen der symbolspezifischen Amplitudenreferenzen und zum Erzeugen von ersten und zweiten Symbolschätzungen für die ersten und zweiten Symbole, und einen Demodulationsprozessor, konfiguriert zum Demodulieren der ersten und zweiten Symbole gemäß einer definierten amplitudenbasierten Modulationskonstellation als eine Funktion der ersten und zweiten Symbolschätzungen und der symbolspezifischen Amplitudenreferenzen.

24. Empfängerschaltung nach Anspruch 23, worin der Front-End-Prozessor einen von Folgenden umfasst: einen Rake-basierten Entzerrungsprozessor, einen Entscheidungsfeedback-Entzerrungsprozessor oder einen Chipentzerrungsprozessor.

25. Empfängerschaltung nach Anspruch 23, worin der Front-End-Prozessor einen linearen Mehrbenutzerdetektion(MUD)-Prozessor umfasst, konfiguriert zum Erzeugen der mindestens einen von gemeinsamen Korrelationsschätzungen und gemeinsamen Kombinationsgewichten gleichermaßen für die ersten und zweiten Symbole durch Erzeugen von gemeinsamen Korrelationsschätzungen, die den ersten und zweiten Symbolen gemein sind als eine Funktion von Spreizwellenform-Kreuzkorrelationen und konfiguriert zum Erzeugen der symbolspezifischen Amplitudenreferenzen aus den gemeinsamen Korrelationsschätzungen oder aus Kombinationsgewichten, die aus den gemeinsamen Korrelationsschätzungen abgeleitet sind.

**Revendications**

1. Procédé de traitement d'un signal reçu d'accès multiple par répartition en code à séquence directe, « DS-CDMA », qui inclut des premier et second symboles d'intérêt modulés en amplitude, lesquels premier et second symboles sont envoyés en parallèle par le biais de différentes séquences de code au cours d'un même intervalle de symboles, le procédé comprenant les étapes ci-dessous consistant à :

générer au moins l'une parmi des estimations de corrélations partagées et des pondérations de combinaison partagées dérivées des estimations de corrélations partagées, lesquelles estimations de corrélations partagées sont en commun pour les premier et second symboles et sont formées à partir de corrélations croisées entre des formes d'onde de symboles respectives pour les premier et second symboles, dans lequel lesdites estimations de corrélations partagées et lesdites pondérations de combinaison partagées sont générées en traitant le signal d'accès DS-CDMA reçu ;
déterminer des réponses de canal nettes spécifiques à un symbole pour les premier et second symboles ; et
calculer des références d'amplitude spécifiques à un symbole pour les premier et second symboles en fonction de réponses de canal nettes spécifiques à un symbole et de ladite au moins l'une parmi les estimations de corrélations partagées et les pondérations de combinaison partagées.

2. Procédé selon la revendication 1, en outre **caractérisé en ce que** l'étape de détermination des réponses de canal nettes spécifiques à un symbole pour les premier et second symboles comporte l'étape consistant à calculer des première et seconde réponses nettes spécifiques à un symbole pour les premier et second symboles sur la base de fonctions d'autocorrélation apériodique de première et seconde séquences de code d'étalement utilisées dans le cadre de la transmission des premier et second symboles, respectivement.

3. Procédé selon la revendication 1, en outre **caractérisé en ce que** l'étape de génération de ladite au moins l'une parmi les estimations de corrélations partagées et les pondérations de combinaison partagées consiste à générer des estimations de corrélations partagées sous la forme de l'une parmi des estimations de corrélation de données ou de détérioration moyennée par code qui ne sont pas spécifiques au premier symbole ou au second symbole, ou sous la forme d'estimations de corrélation de données spécifiques à un code à partir du signal d'accès DS-CDMA reçu qui dépendent à la fois des premier et second symboles.

4. Procédé selon la revendication 3, en outre **caractérisé en ce que** l'étape de calcul des références d'amplitude spécifiques à un symbole pour les premier et second symboles consiste à calculer les références d'amplitude spécifiques à un symbole en fonction des réponses de canal nettes spécifiques à un symbole et des estimations de corrélations partagées.

5. Procédé selon la revendication 3, en outre **caractérisé par** l'étape consistant à dériver des pondérations de combinaison à partir des estimations de corrélations partagées et par l'étape consistant à calculer les références d'amplitude spécifiques à un symbole en fonction des réponses de canal nettes spécifiques à un symbole et des pondérations de combinaison.

6. Procédé selon la revendication 1, en outre **caractérisé en ce que** l'étape de génération de ladite au moins l'une parmi les estimations de corrélations partagées et les pondérations de combinaison partagées comprend l'étape consistant à estimer de manière adaptative des pondérations de combinaison partagées en commun pour les premier et second symboles par l'intermédiaire d'un processus de filtrage adaptatif, et l'étape consistant à calculer des références d'amplitude spécifiques à un symbole en fonction des réponses de canal nettes spécifiques à un symbole et des pondérations de combinaison partagées.

7. Procédé selon la revendication 1, en outre **caractérisé par** l'étape consistant à générer des première et seconde estimations de symboles pour les premier et second symboles dans un processus de combinaison d'égalisation de puce ou de récepteur « Rake » généralisé qui inclut la génération de ladite au moins l'une des estimations de corrélations partagées et des pondérations de combinaison partagées en commun pour les premier et second symboles, en calculant des estimations de corrélations partagées sous la forme d'estimations de corrélations moyennées par code, et qui inclut la combinaison de valeurs de signal pour le premier symbole et le second symbole selon des pondérations de combinaison dérivées des estimations de corrélations moyennées par code.

8. Procédé selon la revendication 7, en outre **caractérisé par** l'étape consistant à démoduler les premier et second symboles selon une constellation de modulation à base d'amplitude définie en fonction des première et seconde estimations de symboles et des références d'amplitude spécifiques à un symbole.

9. Procédé selon la revendication 1, en outre **caractérisé par** l'étape consistant à générer des première et seconde estimations de symboles pour les premier et second symboles dans un processus de détection multi-utilisateur linéaire (MUD) qui inclut la génération de ladite au moins l'une des estimations de corrélations partagées et des pondérations de combinaison partagées en commun pour les premier et second symboles en calculant des estimations de corrélations partagées sous la forme d'estimations de corrélations spécifiques à un code qui dépendent des premier et second symboles, et qui inclut la combinaison de valeurs de signal pour le premier symbole et le second symbole selon des pondérations de combinaison dérivées des estimations de corrélations spécifiques à un code, en vue de générer les première et seconde estimations de symboles, respectivement.

10. Procédé selon la revendication 9, en outre **caractérisé par** l'étape consistant à démoduler les premier et second symboles selon une constellation de modulation à base d'amplitude définie en fonction des première et seconde estimations de symboles et des références d'amplitude spécifiques à un symbole.

11. Procédé selon la revendication 10, en outre **caractérisé par** l'étape consistant à dériver des estimations de variance du bruit spécifiques à un symbole, et dans lequel l'étape de démodulation des premier et second symboles comporte l'étape consistant à générer des valeurs logiques représentant les premier et second symboles en fonction des première et seconde estimations de symboles, des références d'amplitude spécifiques à un symbole et des estimations de variance du bruit spécifiques à un symbole.

12. Circuit de récepteur configuré de manière à traiter un signal reçu d'accès multiple par répartition en code à séquence directe, « DS-CDMA », qui inclut des premier et second symboles d'intérêt modulés en amplitude, lesquels premier et second symboles sont envoyés en parallèle par le biais de différentes séquences de code au cours d'un même intervalle de symboles, le circuit de récepteur comprenant un ou plusieurs circuits de traitement configurés de manière à :

générer au moins l'une parmi des estimations de corrélations partagées et des pondérations de combinaison partagées dérivées des estimations de corrélations partagées, lesquelles estimations de corrélations partagées sont en commun pour les premier et second symboles et sont formées à partir de corrélations croisées entre des formes d'onde de symboles respectives pour les premier et second symboles, dans lequel lesdites estimations de corrélations partagées et lesdites pondérations de combinaison partagées sont générées en traitant le signal d'accès DS-CDMA reçu ;

déterminer des réponses de canal nettes spécifiques à un symbole pour les premier et second symboles ; et

calculer des références d'amplitude spécifiques à un symbole pour les premier et second symboles en fonction de réponses de canal nettes spécifiques à un symbole et de ladite au moins l'une parmi les estimations de corrélations partagées et les pondérations de combinaison partagées.

13. Circuit de récepteur selon la revendication 12, en outre **caractérisé en ce que** le circuit de récepteur est configuré de manière à déterminer les réponses de canal nettes spécifiques à un symbole pour les premier et second symboles en calculant des première et seconde réponses nettes spécifiques à un symbole pour les premier et second symboles sur la base de fonctions d'autocorrélation apériodique de première et seconde séquences de code d'étalement utilisées dans le cadre de la transmission des premier et second symboles, respectivement.

14. Circuit de récepteur selon la revendication 12, en outre **caractérisé en ce que** le circuit de récepteur est configuré de manière à générer ladite au moins l'une parmi les estimations de corrélations partagées et les pondérations de combinaison partagées, en générant des estimations de corrélations partagées sous la forme de l'une parmi des estimations de corrélation moyennée par code qui ne sont pas spécifiques au premier symbole ou au second symbole, ou sous la forme d'estimations de corrélation de données spécifiques à un code qui dépendent à la fois des premier et second symboles.

15. Circuit de récepteur selon la revendication 14, en outre **caractérisé en ce que** le circuit de récepteur est configuré de manière à calculer les références d'amplitude spécifiques à un symbole pour les premier et second symboles, en calculant les références d'amplitude spécifiques à un symbole en fonction des réponses de canal nettes spécifiques à un symbole et des estimations de corrélations partagées.

16. Circuit de récepteur selon la revendication 14, en outre **caractérisé en ce que** le circuit de récepteur est configuré de manière à dériver des pondérations de combinaison à partir des estimations de corrélations partagées, et à calculer les références d'amplitude spécifiques à un symbole en fonction des réponses de canal nettes spécifiques à un symbole et des pondérations de combinaison.

17. Circuit de récepteur selon la revendication 12, en outre **caractérisé en ce que** le circuit de récepteur est configuré de manière à générer ladite au moins l'une parmi les estimations de corrélations partagées et les pondérations de combinaison partagées en estimant de manière adaptative des pondérations de combinaison partagées en commun pour les premier et second symboles par l'intermédiaire d'un processus de filtrage adaptatif, et en calculant les références d'amplitude spécifiques à un symbole en fonction des réponses de canal nettes spécifiques à un symbole et des pondérations de combinaison partagées.

18. Circuit de récepteur selon la revendication 12, en outre **caractérisé en ce que** le circuit de récepteur est configuré de manière à générer des première et seconde estimations de symboles pour les premier et second symboles dans un processus de combinaison d'égalisation de puce ou de récepteur « Rake » généralisé qui inclut la génération de ladite au moins l'une des estimations de corrélations partagées et des pondérations de combinaison partagées en commun pour les premier et second symboles, en calculant des estimations de corrélations partagées sous la forme d'estimations de corrélations moyennées par code, et qui inclut la combinaison de valeurs de signal pour le premier symbole et le second symbole selon des pondérations de combinaison dérivées des estimations de corrélations moyennées par code.

19. Circuit de récepteur selon la revendication 18, en outre **caractérisé en ce que** le circuit de récepteur est configuré de manière à démoduler les premier et second symboles selon une constellation de modulation à base d'amplitude définie en fonction des première et seconde estimations de symboles et des références d'amplitude spécifiques à un symbole.

20. Circuit de récepteur selon la revendication 12, en outre **caractérisé en ce que** le circuit de récepteur est configuré de manière à générer des première et seconde estimations de symboles pour les premier et second symboles dans un processus de détection multi-utilisateur linéaire (MUD) qui inclut la génération de ladite au moins l'une des estimations de corrélations partagées et des pondérations de combinaison partagées en commun pour les premier et second symboles, en calculant des estimations de corrélations partagées sous la forme d'estimations de corrélations spécifiques à un code, et qui inclut la combinaison de valeurs de signal pour le premier symbole et pour le second symbole selon des pondérations de combinaison dérivées des estimations de corrélations spécifiques à un code, en vue de générer les première et seconde estimations de symboles, respectivement.

21. Circuit de récepteur selon la revendication 20, en outre **caractérisé en ce que** le circuit de récepteur est configuré de manière à démoduler les premier et second symboles selon une constellation de modulation à base d'amplitude définie en fonction des première et seconde estimations de symboles et des références d'amplitude spécifiques à un symbole.

22. Circuit de récepteur selon la revendication 21, en outre **caractérisé en ce que** le circuit de récepteur est configuré de manière à dériver des estimations de variance du bruit spécifiques à un symbole, et à démoduler les premier et second symboles en générant des valeurs logiques représentant les premier et second symboles en fonction des première et seconde estimations de symboles, des références d'amplitude spécifiques à un symbole et des estimations de variance du bruit spécifiques à un symbole.

23. Circuit de récepteur selon la revendication 12, dans lequel ledit un ou lesdits plusieurs circuits de traitement incluent un processeur d'extrémité frontale configuré de manière à générer les références d'amplitude spécifiques à un symbole et à générer des première et seconde estimations de symboles pour les premier et second symboles, et un processeur de démodulation configuré de manière à démoduler les premier et second symboles selon une constellation de modulation à base d'amplitude définie en fonction des première et seconde estimations de symboles et des références d'amplitude spécifiques à un symbole.

24. Circuit de récepteur selon la revendication 23, dans lequel le processeur d'extrémité frontale comprend l'un parmi un processeur d'égalisation à base de récepteur « Rake », un processeur d'égalisation à rétroaction de décision ou un processeur d'égalisation de puce.

25. Circuit de récepteur selon la revendication 23, dans lequel le processeur d'extrémité frontale comprend un processeur de détection multi-utilisateur linéaire (MUD) configuré de manière à générer ladite au moins l'une des estimations de corrélations partagées et des pondérations de combinaison partagées en commun pour les premier et second symboles, en générant des estimations de corrélations partagées communes aux premier et second symboles en fonction de corrélations croisées de formes d'onde d'étalement, et configuré de manière à générer les références d'amplitude spécifiques à un symbole à partir des estimations de corrélations partagées ou de pondérations de combinaison dérivées des estimations de corrélations partagées.

FIG. 1

**FIG. 2**

EP 2 304 879 B1

GENERATING SHARED
CORRELATION ESTIMATES
AND/OR SHARED COMB. WEIGHTS
100

DETERMINING SYMBOL-SPECIFIC
NET CHANNEL RESPONSES
102

COMPUTE SYMBOL-SPECIFIC
AMPLITUDE REFS. AS A FUNCTION
OF SHARED CORR. ESTIMATES
OR SHARED COMB. WEIGHTS
AND SYMBOL-SPECIFIC NET
CHANNEL RESPONSES
104

*FIG. 3*

40 (OR 26)

FRONT-END RECEIVER
(e.g., LMUD)
50

SHARED
CORR.
EST.
66

SHARED
COMB.
WEIGHTS
68

SYMBOL-SPECIFIC
NET CHAN. RESP.
(e.g., 70-1, 70-2)
70

r

48

SYMBOL
ESTIMATES 54
(e.g., 54-1, -2)

SYMBOL-SPECIFIC
AMPLITUDE REFS. 58
(e.g., 58-1, -2)

QAM
DEMODULATOR
52

MOD.
CONSTELLATION
56

DEMODULATED DATA 60
(e.g., HARD DECISIONS 62
OR SBVs 64)

*FIG. 4*

EP 2 304 879 B1

**FIG. 5**

**FIG. 6**

EP 2 304 879 B1

*FIG. 7*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7269205 B
- US 06435105 A, Cairns
- US 20060188006 A1
- US 20070047628 A1
- US 21563805 A

### Non-patent literature cited in the description

- **G. E. BOTTOMLEY ; T. OTTOSSON ; Y.-P. E. WANG.** A Generalized RAKE receiver for interference suppression. *IEEE J. Select. Areas Commun.,* August 2000, vol. 18, 1536-1545
- **K. YU ; J.S. EVANS ; I.B. COLLINGS.** Performance analysis of LMMSE receivers for M-ary QAM in Raleigh faded CDMA channels. *IEEE Trans. Veh. Technol.,* September 2003, vol. 52, 1242-1253
- **K. YU ; I. OPPERMANN.** Symbol/bit-error rate of LMMSE receiver for M-ary QAM in multipath faded CDMA channels. *IEEE Trans. Wireless Commun,* July 2005, vol. 4, 1400-1406
- **G. E. BOTTOMLEY ; T. OTTOSSON ; Y.-P. E. WANG.** A generalized RAKE receiver for interference suppression. *IEEE J. Selected Areas Commun,* August 2000, vol. 18 (8